(19) Europäisches Patentamt
European Patent Office
Office européen des brevets

(11) **EP 4 718 319 A1**

(12) **EUROPEAN PATENT APPLICATION**

(43) Date of publication:
**01.04.2026 Bulletin 2026/14**

(21) Application number: **24202879.3**

(22) Date of filing: **26.09.2024**

(51) International Patent Classification (IPC):
**G06N 3/0442** (2023.01)     **G06N 3/092** (2023.01)
**G06N 7/01** (2023.01)

(52) Cooperative Patent Classification (CPC):
**G06N 3/0442; G06N 3/092; G06N 7/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
- **Vinogradska, Julia
  70839 Gerlingen (DE)**
- **Peters, Jan
  64342 Seeheim-Jugenheim (DE)**
- **Berkenkamp, Felix
  80335 München (DE)**
- **Bottero, Alessandro Giacomo
  70193 Stuttgart (DE)**
- **Luis Goncalves, Carlos Enrique
  70192 Stuttgart (DE)**

(54) **DEVICE AND METHOD FOR CONTROLLING AN AGENT**

(57) According to various embodiments, a method for controlling an agent is described, comprising determining, for a present state of the agent and a state of an environment of the agent in which the agent should be controlled, a control history indicating a sequence of actions performed by the agent that led to the present state and indicating observations about changes of a state of the agent and/or a state of an environment of the agent, determining an encoding of the control history by supplying the control history to a history encoder comprising a Kalman filter, wherein the encoding is given by a system state estimate determined by the Kalman filter, supplying the encoding to a control policy trained to determine actions from control policy encodings and controlling the agent to perform an action provided by the control policy in response to being supplied with the encoding.

Fig. 1

**Description**

The present disclosure relates to devices and methods for controlling an agent.

Reinforcement Learning (RL) is a machine learning paradigm that allows a machine to learn to perform desired behaviours with respect to a task specification, e.g. which control actions to take to reach a goal location in a robotic navigation scenario. Learning a policy that generates these behaviours with reinforcement learning differs from learning it with supervised learning in the way the training data is composed and obtained: While in supervised learning the provided training data consists of matched pairs of inputs to the policy (e.g. observations like sensory readings) and desired outputs (actions to be taken), there is no fixed training data provided in case of reinforcement learning. The policy is learned from experience data (i.e. observations) gathered by interaction of the machine with its environment whereby a feedback (reward) signal is provided to the machine that scores/asses the actions taken in a certain context (state).

The determination of the action to be taken next (i.e. the policy) and, in case of an actor-critic scheme, the estimation of a value of an action taken (or a state reached), may not only be based on the last observation and action, but also preceding observations and actions (i.e. historical data) to enable better control. However, this makes the input to the corresponding modules (e.g. actor (i.e. policy) and critic) more complex. Accordingly, approaches are desirable which efficiently allow inputting information from historical data to a policy and/or a critic.

The publication Simo Sarkka and Angel F. Garcia-Fernandez, "Temporal Parallelization of Bayesian Smoothers", IEEE Transactions on Automatic Control, 66(1):299-306, January 2021, denoted as reference [1] in the following, describes algorithms for temporal parallelization of Bayesian smoothers, in particular Kalman filters.

The publication P. Becker et al., "On Uncertainty in Deep State Space Models for Model-Based Reinforcement Learning", in Transactions on Machine Learning Research, October 10, 2022, denoted as reference [2] in the following, describes Kalman filtering using a Structured State Space model.

According to various embodiments, a method for controlling an agent is provided, comprising determining, for a present state of the agent and a state of an environment of the agent in which the agent should be controlled, a control history indicating a sequence of actions performed by the agent that led to the present state and indicating observations about changes of a state of the agent and/or a state of an environment of the agent, determining an encoding of the control history by supplying the control history to a history encoder comprising a Kalman filter, wherein the encoding is given by a system state estimate determined by the Kalman filter, supplying the encoding to a control policy trained to determine actions from control policy encodings and controlling the agent to perform an action provided by the control policy in response to being supplied with the encoding.

The method described above allows, by using internal probabilistic filtering (in form of the Kalman filter) compressing historical data while solving problems that require reasoning over uncertainty. For example, when the controlled system (e.g. agent in its environment) emits noisy observations, the Kalman filter outputs a filtered latent representation that can then be used for policy optimization. Also, the Kalman filter may be stacked, which enables more complex architectures. The Kalman filter may have trainable parameters which may be trained end-to-end together with the policy. This means that its representation of uncertainty, which is used for filtering of the latent state, is learned in a way that aims to maximize returns of the policy

The method described above may be applied in the context of reinforcement learning under partial observability, where a reinforcement learning (RL) model does not have access to the underlying state of the system to be controlled, but rather it infers such a state from the history of past observations and actions (i.e. a control history). For instance, systems with noisy observations, or systems whose parameters change over time fit this setting. The method may be used for training a policy online under such conditions. The method implements internally probabilistic filtering for linear systems (in form of the Kalman filter) whose parameters can be trained directly through a RL loss function that aims to maximize the expected return. The probabilistic filtering serves as an inductive bias for learning a good latent representation for control.

In the following, various examples are given.

Example 1 is a method for controlling an agent as described above.

Example 2 is the method of example 1, comprising training the control policy wherein parameters of the Kalman filter are trained together with the control policy.

For example, the whole control architecture (i.e. control pipeline including the Kalman filter, i.e. history encoder, and the policy) may be trained end-to-end. Training the Kalman filter together with the control policy ensures that in the generation of the encoding by the Kalman filter, information necessary for effective selection of control actions is maintained (i.e. is not lost in the encoding).

Example 3 is the method of example 1 or 2, comprising training the control policy using reinforcement learning.

This allows effective training of the control policy and the Kalman filter along with it. In other words, according to various embodiment, a method for training a control policy for controlling an agent is provided, comprising performing actions with the agent (selected by the control policy in response to being supplied with control history encodings) and observing state transitions of the agent and/or an environment of the agent in response to the actions and observing rewards received from the state transitions and training the agent using reinforcement learning according to the rewards received from the state transitions.

Example 4 is the method of any one of examples 1 to 3, wherein the Kalman filter is configured to estimate the system state using a linear structured state space model for the system state and the observations which is given by trainable matrices having diagonal structure.

This gives stability when handling long sequences.

Example 5 is the method of any one of examples 1 to 4, comprising parallel processing of multiple control histories.

For example, a trajectory determined in a rollout may be separated into sub-trajectories which are processed in parallel to speed up training.

Example 6 is the method of any one of examples 1 to 5, wherein the Kalman filter is configured to repeat, for a control history which indicates a sequence being shorter than a default length, the system state estimate (in each estimation iteration, i.e. iteration of prediction and update) it has determined by the end of the sequence until it has reached a number of estimation iterations corresponding to the default length.

This enables parallel processing of control histories (e.g. trajectories or sub-trajectories of a trajectory) of different length. Triggering the Kalman filter to perform the repetition of the last system state estimate can be achieved by using a masked binary operator as described below (see equation (4)). This enables parallel processing without the need to pad sequences with some arbitrary masking value, which may not be well-defined for non-discrete sequences.

Example 7 is the method of any one of examples 1 to 6, comprising determining the encoding of the control history by supplying the control history to a first Kalman filter of a sequence of (one or more) Kalman filters, supplying system state estimates of each Kalman filter of the sequence but the last to the next Kalman filter in the sequence, wherein the encoding is given by (e.g. equal to) a system state estimate determined by the last Kalman filter of the sequence.

In other words, multiple Kalman filters (i.e. Kalman filter layers, each implementing a Kalman filter) may be stacked (i.e. successively applied) to determine the encoding. This allows more flexibility in the encoding. The last Kalman filter of the sequence (which may also be a single Kalman filter) may be understood to correspond to the Kalman filter mentioned in example 1. The Kalman filters may be connected via linear layers to ensure the match of the input and output dimensionalities.

Example 8 is a controller, configured to perform a method of any one of examples 1 to 7.

Example 9 is a computer program comprising instructions which, when executed by a computer, makes the computer perform a method according to any one of examples 1 to 7.

Example 10 is a computer-readable medium comprising instructions which, when executed by a computer, makes the computer perform a method according to any one of examples 1 to 7.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1    shows a control scenario according to an embodiment.

Figure 2    illustrates a recurrent actor-critic architecture as an example for a reinforcement learning architecture using history encoders.

Figure 3    illustrates a Kalman filter (KF) layer according to an embodiment.

Figure 4    shows a flow diagram 00 illustrating a method for controlling an agent.

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

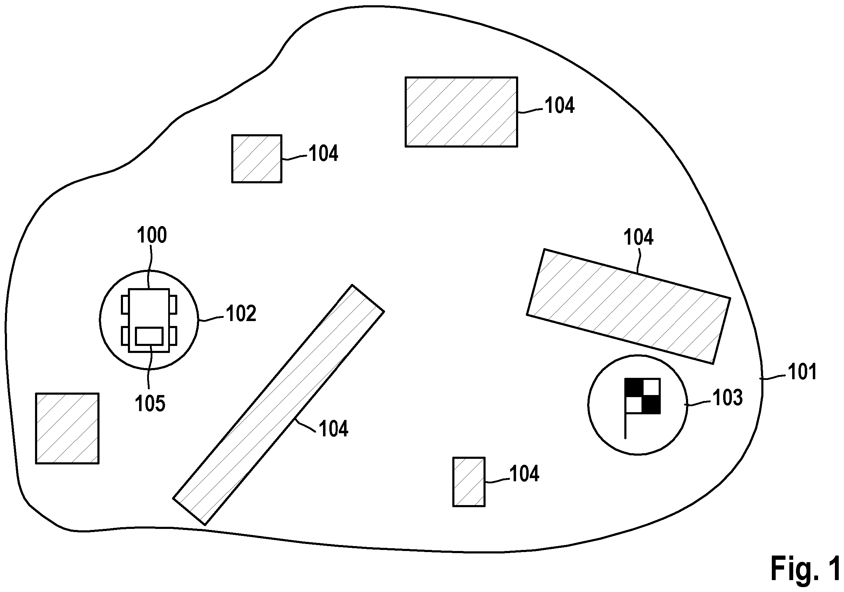

Figure 1 shows a control scenario.

A robot 100 is located in an environment 101. The robot 100 has a start position 102 and should reach a goal position 103. The environment 101 contains obstacles 104 which should be avoided by the robot 100. For example, they may not be passed by the robot 100 (e.g. they are walls, trees or rocks) or should be avoided because the robot would damage or hurt them (e.g. pedestrians).

The robot 100 has a controller 105 (which may also be remote to the robot 100, i.e. the robot 100 may be controlled by remote control). In the exemplary scenario of figure 1, the goal is that the controller 105 controls the robot 100 to navigate the environment 101 from the start position 102 to the goal position 103. For example, the robot 100 is an autonomous vehicle but it may also be a robot with legs or tracks or other kind of propulsion system (such as a deep sea or mars rover).

Furthermore, embodiments are not limited to the scenario that a robot should be moved (as a whole) between positions 102, 103 but may also be used for the control of a robotic arm whose end-effector should be moved between positions 102, 103 (without hitting obstacles 104) etc.

Accordingly, in the following, terms like robot, vehicle, machine, etc. are used as examples for the "object", i.e. computer-controlled system (e.g. machine), to be controlled. The approaches described herein can be used with different types of computer-controlled machines like robots or vehicles and other. The general term "robot device" is also used in the following to refer to all kinds of technical system which may be controlled by the approaches described in the following. The environment may also be simulated, e.g. the control policy may for example be a control policy for a virtual vehicle or other movable device, e.g. in a simulation for testing another policy for autonomous driving.

Ideally, the controller 105 has learned a control policy that allows it to control the robot 101 successfully (from start position 102 to goal position 103 without hitting obstacles 104) for arbitrary scenarios (i.e. environments, start and goal positions) in particular scenarios that the controller 105 has not encountered before.

Various embodiments thus relate to learning a control policy for a specified (distribution of) task(s) by interacting with the environment 101. In training, the scenario (in particular environment 101) may be simulated but it will typically be real in deployment.

An approach to learn a control policy is reinforcement learning (RL) where the robot 100 and/or its controller 105, acts as reinforcement learning agent.

Reinforcement Learning (RL) is a technique for learning a control policy. An RL algorithm iteratively updates the parameters $\theta$ of a parametric policy $\pi_\theta$ (a|s), for example represented by a neural network, that maps states s (e.g. (preprocessed) sensor signals) to actions a (control signals). During training, the policy interacts in rollouts episodically (i.e. in one or more episodes) with the (possibly simulated) environment 101. During a (possibly simulated) training rollout in the environment 101, the controller 105, according to a current control policy, executes, in every discrete time step t an action a according to the current state $s_t$, which leads to a new state $s_{t+1}$ in the next discrete time step. Furthermore, a reward $r_t$ is received, which it uses to update the policy. A (training) rollout ends once a goal state is reached, the accumulated (potentially discounted) rewards surpass a threshold, or the maximum number of time steps, the time horizon T, is reached. During training a reward-dependent objective function (e.g. the discounted sum of rewards received during a rollout) is maximized by updating the parameters of the policy. In case of an actor critic RL scheme as in the example below the training also includes updating the critic(s). The training ends once the policy meets a certain quality criterion with respect to the objective function, a maximum number of policy updates have been performed, or a maximum number of steps have been taken in the (simulation) environment.

For the following examples, an agent is considered that acts in a finite-horizon partially observable Markov decision process (POMDP)

$$\mathcal{M} = \{\mathcal{S}, \mathcal{A}, \mathcal{O}, T, p, O, r, \gamma\}$$

with state space $\mathcal{S}$, action space $\mathcal{A}$, observation space $\mathcal{O}$, horizon $T \in \mathbb{N}$, transition function $p$: $\mathcal{S} \times \mathcal{A} \to \mathcal{P}(\mathcal{S})$ that maps states and actions to a probability distribution over $\mathcal{S}$, an emission function $O$: $\mathcal{S} \to \mathcal{P}(\mathcal{O})$ that maps states to a probability distribution over observations, a reward function $r : \mathcal{S} \times \mathcal{A} \to \mathbb{R}$ and a discount factor $\gamma \in [0,1)$.

At time step $t$ of an episode in $\mathcal{M}$, the agent observes $o_t \sim O(\cdot \mid s_t)$ and selects an action $a_t \in \mathcal{A}$ based on the observed history $h_{:t} = \left\{ (o_h, a_h) \right\}_{h=0}^{t} \in \mathcal{H}_t$, then receives a reward $r_t = r(s_t, a_t)$ and the next observation $o_{:t+1} \sim O(\cdot \mid s_{t+1})$ with $s_{t+1} \sim p(\cdot \mid s_t, a_t)$.

A general setting is considered the (RL) agent is equipped with: (i) a stochastic policy $\pi$: $\mathcal{H}_t \to \mathcal{P}(\mathcal{A})$ (the parameters of the policy $\theta$ are omitted here for simplicity) that maps from observed history to distribution over actions, and (ii) a value function $Q^\pi : \mathcal{H}_t \times \mathcal{A} \to \mathbb{R}$ that maps from history and (present) action to the expected return under the policy, defined as

$$Q^\pi(h_{:t}, a_t) = \mathbb{E}_\pi \left[ \sum_{h=t}^{T} \gamma^{h-t} r_t \mid h_{:t}, a_t \right]$$

The objective of the agent (i.e. of the control policy it follows) is to maximizes the value starting from some initial state $s_0$, $\pi^\star = \operatorname{argmax}_\pi \mathbb{E}_\pi \left[ \sum_{t=0}^{T-1} \gamma^t r_t \mid s_0 \right]$. Accordingly, the policy should be trained (i.e. the parameters $\theta$ determined) such that the agent (which follows its policy) achieves this maximization for any initial state $s_0$.

A weakness of approaches following the general formulation of RL in POMDPs as above is the dependence of both the policy and the values function from the entire history, which becomes intractable for all but the smallest problems . Instead, practical algorithms search to compress the history into a compact representation.

One general framework to learn such representations is through history encoders, which can be defined by a mapping $\phi: \mathcal{H}_t \to \mathcal{Z}$ from observed history to some latent representation $z_t := \phi(h_{:t}) \in \mathcal{Z}$. In the following, with slight abuse of notation, $\pi(a_t \mid z_t)$ and $Q^\pi(z_t, a_t)$ denote the policy and values under this latent representation, respectively.

According to various embodiments, a history encoder is used which is based on a Recurrent Kalman Network (RKN) that implements simple probabilistic inference on a latent state. In other words, a history encoder is used that comprises one or more layers, each layer operating according to a Kalman filter.

A Kalman filter operates based on a linear dynamic system discretized in the time domain. According to various embodiments, for this, a time-varying linear State Space Model (SSM) is considered defined by

$$\begin{cases} \dot{z}(t) &= \mathbf{A}_t z(t) + \mathbf{B}_t u(t) \\ y(t) &= \mathbf{C}_t z(t) + \mathbf{D}_t u(t) \end{cases} \qquad (1)$$

where $t > 0 \in \mathbb{R}$, $z(t) \in \mathbb{R}^N$ is the state (to be estimated by the Kalman filter), $u(t) \in \mathbb{R}^P$ is the input (i.e. the actions), $y(t) \in \mathbb{R}^M$ is the output and $(\mathbf{A}_t, \mathbf{B}_t, \mathbf{C}_t, \mathbf{D}_t)$ are matrices of appropriate size. Such a continuous-time system can be discretized (e.g., using zero-order hold) for some step size $\Delta$, resulting in a linear recurrent model

$$\begin{cases} z_k &= \bar{\mathbf{A}}_k z_{k-1} + \bar{\mathbf{B}}_k u_k \\ y_k &= \bar{\mathbf{C}}_k z_k + \bar{\mathbf{D}}_k u_k \end{cases} \qquad (2)$$

As it is common in practice, $\bar{\mathbf{D}}_n \equiv \mathbf{0}$ is set. According to various embodiments, structured SSMs are considered, which simply means special structure is imposed into the learnable matrices $(\bar{\mathbf{A}}_n, \bar{\mathbf{B}}_n, \bar{\mathbf{C}}_n)$. In particular, a diagonal structure with a HiPPO (High-order Polynomial Projection Operators) initialization may be used which induces stability in the recurrence for handling long sequences.

To introduce uncertainty into state-space models (according to (2) with $\bar{\mathbf{D}}_n \equiv \mathbf{0}$), a standard linear-Gaussian SSM

$$\begin{cases} z_k &= \bar{\mathbf{A}}_k z_{k-1} + \bar{\mathbf{B}}_k u_k + \varepsilon_k \\ y_k &= \bar{\mathbf{C}}_k z_k + \nu_k \end{cases} \qquad (3)$$

may be considered where $\varepsilon_k \sim \mathcal{N}(0, \Sigma_z)$ and $v_k \sim \mathcal{N}(0, \Sigma_y)$ are zero-mean transition and observation noise variables with their covariance matrices $\Sigma_z$ and $\Sigma_y$, respectively. The dynamics probabilistic model used by the Kalman filter is then

$$p(z_k \mid z_{k-1}, u_k) = \mathcal{N}(\bar{\mathbf{A}}_k z_{k-1} + \bar{\mathbf{B}}_k u_k, \Sigma_z)$$

and the observation model used by the Kalman filter is

$$p(y_k \mid z_k) = \mathcal{N}(\bar{\mathbf{C}}_k z_k, \Sigma_y)$$

There is a closed-form solution for Kalman filtering using such models which may be used for implementing the Kalman filter. These, however, require matrix inversions, which may be expensive and unsuitable for gradient-based learning. Therefore, according to various embodiments, simplified inference schemes under which Kalman filtering is composed of simple element-wise addition and multiplication are used. In particular, Structured SSMs with a diagonal shape are amenable to simple Kalman filtering equations, e.g. as given in reference [2]. One key benefit of using linear recurrences and simplified inference schemes is they can be efficiently implemented using parallel scans. For an input sequence of length K, a parallel scan's runtime complexity is $O(\log(K))$, given sufficient parallel processors. The condition for a parallel scan is to define the sequence processing problem in terms of an associative operator ●, such that $(a \bullet b) \bullet c = \alpha \bullet (b \bullet c)$ holds for any triplet of elements $(a, b, c)$. Linear SSMs and their associated probabilistic filters have such a property, see reference [1].

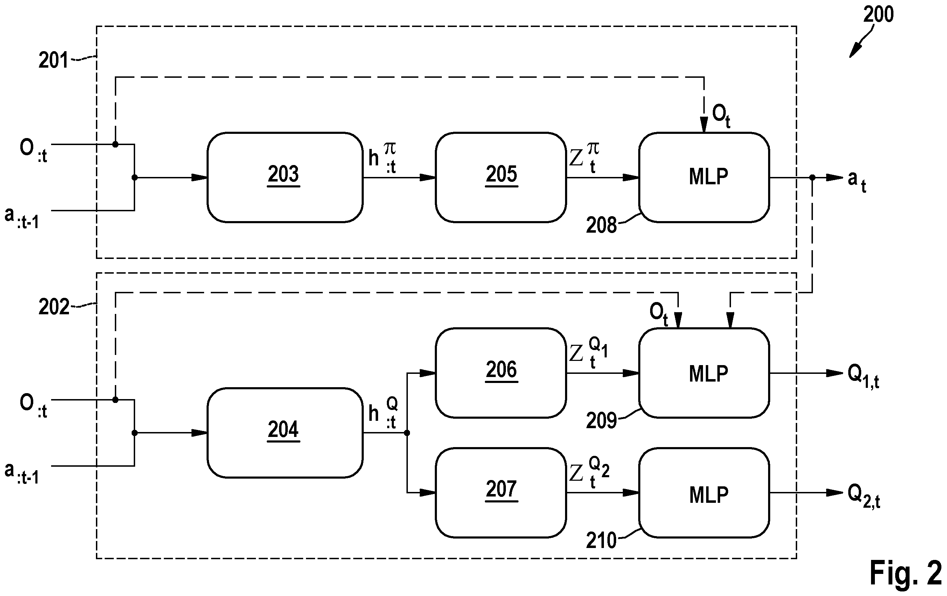

Figure 2 illustrates a recurrent actor-critic architecture 200 as an example for a reinforcement learning architecture using history encoders.

Each of an actor 201 and a critic 202 comprise an embedder 203, 204 which generates a history (as described above) from observations and actions. A history encoder 205, 206, 207 encodes the history to a latent state based which is used as input for the policy, implemented by a first multi-layer perceptron 208 as well as two versions of the value function, implemented by a second multi-layer perceptron 209 and a third multi-layer perceptron 210. The usage of two value functions is only an example here and a single one may also be used. Using two and for example using the minimum of their outputs as value estimate may increase training stability. The architecture may be trained end-to-end according to various types of (standard) actor critic reinforcement learning and various (actor critic) loss functions, e.g. with a SAC (Soft Actor Critic) loss, which aims to maximize the (soft) Q-values.

As mentioned above, the history encoders 205, 206, 207 each comprise one or more Kalman filter layers.

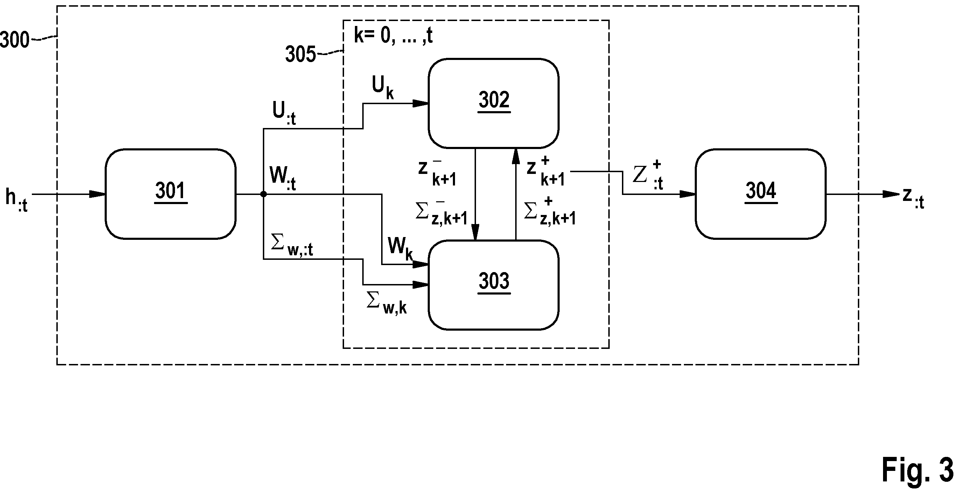

Figure 3 illustrates a Kalman filter (KF) layer 300 according to an embodiment.

Multiple of these Kalman filter layers may be stacked together to form a history encoder 205, 206, 207, e.g. similarly to non-probabilistic SSM layers and their derivatives. In contrast to standard SSM layers, the KF layer 300 produces a filtered latent state $z_{:t}^{+}$, which can then be projected back to the input dimension (i.e. the dimension of the values of the input history $h_{:t}$ which includes embeddings (generated by the respective embedder 203, 204) of the actions, here denoted by $u_{:t}$ see equations (1) to (3) and the observations, here denoted by $w_{:t}$) for stacking. In the present example, the input history's values' dimension is changed (e.g. increased) by a first linear layer 301 and the dimension of the filtered latent states $z_{:t}^{+}$ is decreased to the dimension of the values of the history by a second linear layer 304. Both linear layers 301, 304 (which may be represented by matrix multiplications) are trainable, i.e. they are trained together with the actor and the critic. Similarly, the matrices used by the actual Kalman filter ($\overline{\mathbf{A}}_n$, $\overline{\mathbf{B}}_n$, $\overline{\mathbf{C}}_n$) are trained in the training of the actor and the critic. The KF layer 300 implements a Kalman filter 405 which, according to the two phases of a Kalman filter, performs a prediction 302 and an update 303.

So, the KF layer 300 receives a history sequence $h_{:t}$ and projects it into three separate signals in latent space: the inputs (i.e. the actions) $u_{:t}$, the observations $w_{:t}$ and the observation noise (diagonal) covariance $\Sigma_{w,:t}$. These sequences are processed by the Kalman filter 305 according to the standard Kalman filtering equations, which scale logarithmically with the sequence length using parallel scans. Lastly, the posterior mean latent states $z_{:t}^{+}$ are projected back from the latent space back into the history space to obtain the history encodings $z_{:t}$.

In order to be compute-efficient during training, according to various embodiments, the architecture 200 (i.e. a controller, e.g. controller 105 implementing the architecture) processes, in general, batches of variable-sized trajectories. On the other hand, efficient batch execution of parallel scans requires equally-sized sequences (i.e. all sequence to have a default length). This incongruence is easily remedied in some sequence-modelling tasks (such as language) by introducing special masking tokens, which are used to pad sequences up to a common maximum length. However, in the general case, a suitable mask value may not be easily defined. In particular, when data is not discrete, the choice of a mask value is arbitrary.

Instead, the associative operator may be modified to natively handle variable-sized sequences. For example, in (in particular off-policy) RL, sub-sequences (e.g. sub-trajectories) of an episode (i.e. of a complete trajectory obtained from an episode) are sample as training input and the associative operator is designed to pad shorted sequences by propagating the same state (i.e. the latent state $z_t$ in the present application) over the padded steps. Such an associative operator ● (called masked binary operator) may be designed for any associative operator ● as follows:
Let ● be an associative operator acting on elements $e \in \varepsilon$, such that for any $a, b, c \in \varepsilon$, it holds that $(a \bullet b) \bullet c = a \bullet (b \bullet c)$. Then, the masked binary operator associated with ●, denoted ●, acts on elements $\tilde{e} \in \varepsilon \times \{0, 1\} = (e, m)$, where $m \in \{0, 1\}$ is a binary mask, according to, for $\tilde{a} = (a, m_a)$ and $\tilde{b} = (b, m_b)$,

$$\tilde{a}\tilde{\bullet}\tilde{b} = \begin{cases} (a \bullet b, m_a) & \text{if} \quad m_b = 0 \\ \tilde{a} & \text{if} \quad m_b = 1 \end{cases}$$

$$(4)$$

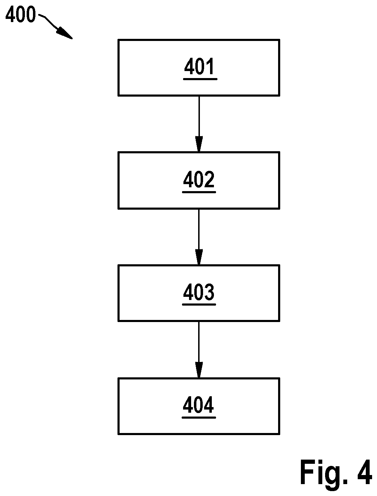

In summary, according to various embodiments, a method is provided as illustrated in figure 4.

Figure 4 shows a flow diagram 400 illustrating a method for controlling an agent (e.g. a technical system like a robot device, e.g. a robot or a vehicle).

In 401, for a present state of the agent and a state of an environment of the agent in which the agent should be controlled, a control history indicating a sequence of actions performed by the agent that led to the present state and indicating observations about changes of a state of the agent and/or a state of an environment of the agent (caused by the sequence of actions) is determined.

In 402, an encoding of the control history is determined (i.e. generated) by supplying the control history to a history encoder comprising a Kalman filter (i.e. the input the Kalman filter expects, i.e. the series of measurements observed over time as a Kalman filter expects it as input, is given by the control history (or at least derived from it, e.g. by one or more preceding Kalman filters)) wherein the encoding is given by a system state estimate determined by the Kalman filter (from the control history, either directly or from a (pre-)processed version of the control history, e.g. by one or more preceding Kalman filters).

In 403, the encoding is supplied to a control policy (or actor) trained to determine actions from control policy encodings. The encoding may also be supplied to a critic in case of using actor critic RL.

In 404, the agent is controlled to perform an action provided by the control policy in response to being supplied with the encoding.

The approach of figure 4 can be used to compute a control signal for controlling a technical system (wherein the technical system or a controller of the technical system may be seen as the agent which in turn follows its control policy and is thus "controlled" by its control policy), like e.g. a computer-controlled machine, like a robot, a vehicle, a domestic appliance, a power tool, a manufacturing machine, a personal assistant or an access control system. According to various embodiments, a policy for controlling the technical system may be learnt and then the technical system may be operated accordingly.

Various embodiments may receive and use various types of sensor data for providing information about the environment and the state of the agent (e.g. technical system), i.e. to gather observations, in form of one or more discrete or continuous signals. This includes any type of measurement (force, velocity etc.) as well as image data (i.e. digital images) from various visual sensors (cameras) such as video, radar, LiDAR, ultrasonic, thermal imaging, motion, sonar etc.

The method of Figure 4 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

## Claims

1.  A method for controlling an agent (100), comprising:

    determining (401), for a present state of the agent (100) and a state of an environment (101) of the agent (100) in which the agent (100) should be controlled, a control history indicating a sequence of actions performed by the agent (100) that led to the present state and indicating observations about changes of a state of the agent (100) and/or a state of an environment (101) of the agent (100);
    determining (402) an encoding of the control history by supplying the control history to a history encoder (205) comprising a Kalman filter (305), wherein the encoding is given by a system state estimate determined by the Kalman filter (305);
    supplying (403) the encoding to a control policy trained to determine actions from control policy encodings; and
    controlling (404) the agent (100) to perform an action provided by the control policy in response to being supplied with the encoding.

2.  The method of claim 1, comprising training the control policy wherein parameters of the Kalman filter (305) are trained together with the control policy.

3. The method of claim 1 or 2, comprising training the control policy using reinforcement learning.

4. The method of any one of claims 1 to 3, wherein the Kalman filter (305) is configured to estimate the system state using a linear structured state space model for the system state and the observations which is given by trainable matrices having diagonal structure.

5. The method of any one of claims 1 to 4, comprising parallel processing of multiple control histories.

6. The method of any one of claims 1 to 5, wherein the Kalman filter (305) is configured to repeat, for a control history which indicates a sequence being shorter than a default length, the system state estimate it has determined by the end of the sequence until it has reached a number of estimation iterations corresponding to the default length.

7. The method of any one of claims 1 to 6, comprising determining the encoding of the control history by supplying the control history to a first Kalman filter (305) of a sequence of Kalman filters (305), supplying system state estimates of each Kalman filter (305) of the sequence but the last to the next Kalman filter (305) in the sequence, wherein the encoding is given by a system state estimate determined by the last Kalman filter (305) of the sequence.

8. A controller, configured to perform a method of any one of claims 1 to 7.

9. A computer program comprising instructions which, when executed by a computer, makes the computer perform a method according to any one of claims 1 to 7.

10. A computer-readable medium comprising instructions which, when executed by a computer, makes the computer perform a method according to any one of claims 1 to 7.

Fig. 1

Fig. 2

Fig. 3

EP 4 718 319 A1

400

401

402

403

404

Fig. 4

**EUROPEAN SEARCH REPORT**

| Application Number |
|---|
| EP 24 20 2879 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CARLOS E LUIS ET AL: "Uncertainty Representations in State-Space Layers for Deep Reinforcement Learning under Partial Observability", ARXIV.ORG, CORNELL UNIVERSITY LIBRARY, 201 OLIN LIBRARY CORNELL UNIVERSITY ITHACA, NY 14853, 25 September 2024 (2024-09-25), XP091890452, * the whole document * | 1-10 | INV. G06N3/0442 G06N3/092 G06N7/01 |

-----

| TECHNICAL FIELDS SEARCHED (IPC) |
|---|
| G06N |

The present search report has been drawn up for all claims

| Place of search | Date of completion of the search | Examiner |
|---|---|---|
| The Hague | 11 February 2025 | Ntarlagiannis, V |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SIMO SARKKA** ; **ANGEL F. GARCIA-FERNANDEZ**. Temporal Parallelization of Bayesian Smoothers. *IEEE Transactions on Automatic Control*, January 2021, vol. 66 (1), 299-306

- **P. BECKER et al.** On Uncertainty in Deep State Space Models for Model-Based Reinforcement Learning. *Transactions on Machine Learning Research*, 10 October 2022